# EUROPEAN PATENT APPLICATION

(11) **EP 4 425 222 A1**
(43) Date of publication of application: **04.09.2024**
(21) Application number: 22883512.0
(22) Date of filing: 14.10.2022
(51) Int. Cl.: G01W 1/00, G01N 21/27

(54) **AEROSOL CONCENTRATION INFERENCE METHOD AND SYSTEM**

(30) Priority: 20.10.2021 JP 2021171760
(71) Applicant: NATIONAL INSTITUTE OF INFORMATION AND COMMUNICATIONS TECHNOLOGY, Tokyo 184-8795 (JP)
(72) Inventor: SATO, Tomohiro, Koganei-shi, Tokyo 184-8795 (JP); MURATA, Takeshi, Koganei-shi, Tokyo 184-8795 (JP); YAMAMOT, Kazunori, Koganei-shi, Tokyo 184-8795 (JP); NIIMI, Michiharu, Kitakyushushi, Fukuoka 804-8550 (JP); TAKABAYASHI, Masanori, Kitakyushushi, Fukuoka 804-8550 (JP); TAKASHIMA, Hisahiro, Fukuoka-shi Fukuoka 814-0180 (JP); ISHII, Shoken, Tokyo 1910065 (JP)
(74) Representative: Peters, Sebastian Martinus
(86) International application number: PCT/JP2022/038452
(87) International publication number: WO 2023/068208

(57) **Abstract**

[Problem] To provide an aerosol concentration inference method and system that do not require a large-scale device. [Solution] This method for inferring an aerosol concentration in a target region using a computer includes: a physical quantity acquisition step for acquiring a physical quantity from a sample image in which the target region has been imaged; an estimation numerical value acquisition step for obtaining an estimation numerical value for inferring the aerosol concentration using the physical quantity; and an aerosol concentration inferring step for inferring the aerosol concentration using the estimation numerical value.

## Description

### TECHNICAL FIELD

This invention relates to a method and a system for estimating an aerosol concentration. More particularly, this invention relates to a method for estimating the aerosol concentration based on a captured image and a system for the method.

### BACKGROUND ART

Japanese Patent No. 5046076 (Patent Document 1) discloses a remote screening image measurement method of aerosol that includes specific substances. This method detects only light with a specific wavelength generated from a specific substance by photoexcitation as an image.

In order to perform this remote screening image measurement method for the aerosol, a large-scale device such as a laser radar is required to perform the photoexcitation. Thus, in this method, there is a problem that locations where the aerosol concentration can be observed are limited.

### CITED LITERATURE

### PATENT LITERATURE

Patent Document 1: Japanese Patent No. 5046076

### SUMMARY OF INVENTION

### TECHNICAL PROBLEM

It is an object of an invention described in this specification to provide a method that allows estimating an aerosol concentration and a system for implementing the method, without requiring a large-scale device.

### SOLUTION TO PROBLEMS

The above-described invention is based on a knowledge that the aerosol concentration can be effectively estimated by, basically, analyzing an image in which a target region has been captured, obtaining a physical quantity from a sample image of the target region, and obtaining an estimation numerical value by using the physical quantity.

An invention relates to a method for estimating an aerosol concentration in a target region using a computer. The method includes a physical quantity acquisition step (S101), an estimation numerical value acquisition step (S102), and an aerosol concentration estimating step (S103).

The physical quantity acquisition step (S101) is a step of acquiring a physical quantity from a sample image in which the target region has been captured.

The estimation numerical value acquisition step (S102) is a step of obtaining an estimation numerical value for estimating the aerosol concentration using the physical quantity.

The aerosol concentration estimating step (S103) is a step of estimating the aerosol concentration using the estimation numerical value.

An example of the above-described method relates to an estimating method of the aerosol concentration in the target region using a reflectance.

This method includes an intensity acquisition step (S101'), a reflectance acquisition step (S102'), and an aerosol concentration estimating step (S103').

The intensity acquisition step (S101') is a step of obtaining an intensity I that is the physical quantity of the sample image from the sample image in which the target region has been captured.

The reflectance acquisition step (S102') is a step of obtaining a reflectance R of the target region using a reference illuminance L₀ and the intensity I of the sample image in which the target region has been captured.

The aerosol concentration estimating step (S103') is a step of estimating the aerosol concentration using the reflectance R.

Then, a preferred example of the reference illuminance L₀ is the illuminance obtained using a spatial image of the target region captured at a capturing place identical to a capturing place of the sample image. It is preferable that the sample image is one that includes a partial region image covering any one or more of a sky upper layer part, a sky lower layer part, a horizon and a boundary part, and a building part.

A preferred example of the aerosol concentration estimating step (S103') is a step of estimating the aerosol concentration using the reflectance R, by using machine learning. It is preferable that the reflectance R is one that includes the reflectance for each of a plurality of color components. Another example of the aerosol concentration estimating step is one that includes a step of estimating the aerosol concentration using a ratio of the reflectances for a respective plurality of color components.

The reflectance of the target region obtained from the sample image of the target region is thought to be correlated with wavelength dependence of light scattering by the aerosol. Thus, it is thought that the aerosol concentration can be effectively estimated by determining the reflectance of the target region.

An example of the above-described method relates to an estimating method of the aerosol concentration in the target region using a ratio of values for each pixel color.

This method includes a color value acquisition step (S101"), a color ratio acquisition step (S102"), and an aerosol concentration estimating step (S103").

The color value acquisition step (S101") is a step of obtaining the value for each color of each pixel of the sample image from the sample image in which the target region has been captured.

The color ratio acquisition step (S102") is a step of obtaining the ratio of the values for each color acquired in the color value acquisition step (S101").

The aerosol concentration estimating step (S103") is a step of estimating the aerosol concentration using the ratio of the values for each color, by the machine learning.

An invention relates to an estimating system 1 of the aerosol concentration using a computer.

This system 1 has a capturing unit 3, a physical quantity acquisition unit (for example, an intensity calculation unit) 5, an estimation numerical value acquisition unit (for example, a reflectance acquisition unit) 7, and an (a first) aerosol concentration estimating unit 9.

The capturing unit 3 is an element for capturing the sample image.

The estimation numerical value acquisition unit 5 is an element for acquiring a predetermined physical quantity from the sample image. For example, the intensity calculation unit obtains the intensity I of the sample image.

The estimation numerical value acquisition unit 7 is an element for acquiring the estimation numerical value for estimating the aerosol concentration using the physical quantity. For example, the reflectance acquisition unit obtains the reflectance R of the region in which the sample image has been captured, using the intensity I of the sample image and the reference illuminance L₀.

The aerosol concentration estimating unit 9 is an element for estimating the aerosol concentration using the estimation numerical value.

### ADVANTAGEOUS EFFECTS OF INVENTION

With the above-described invention, the aerosol concentration in the target region can be obtained simply by capturing the sample image. Thus, this specification can provide a method that can estimate the aerosol concentration and a system for implementing the method, without requiring a large-scale device.

### BRIEF DESCRIPTION OF DRAWINGS

Fig. 1 is a flowchart illustrating an example of an estimating method of an aerosol concentration in a target region.
Fig. 2 is a block diagram illustrating an example of an estimating system of the aerosol concentration.
Fig. 3 is a conceptual diagram illustrating a configuration example of the estimating system of the aerosol concentration.
Fig. 4 is a flowchart illustrating an example of steps for determining the aerosol concentration by a reflectance.
Fig. 5 is a conceptual diagram illustrating an example of pattern matching.
Fig. 6 is a conceptual diagram illustrating processing steps in Working Example 1.
Fig. 7 is a photograph in place of a drawing illustrating an example of a captured sample image.
Fig. 8 is a graph in place of a drawing when the reflectance is derived.
Fig. 9 is a conceptual diagram illustrating processing steps in Working Example 2.

### DESCRIPTION OF EMBODIMENTS

The following describes configurations for implementing the present invention using the drawings. The present invention is not limited to the configurations described below and includes ones appropriately changed in an obvious range by those skilled in the art from the following configurations.

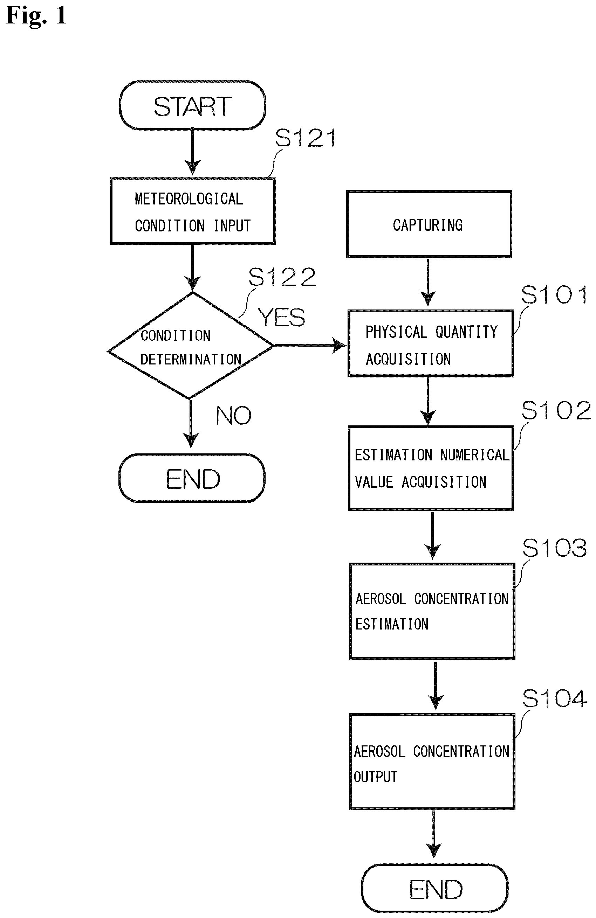

Fig. 1 is a flowchart illustrating an example of an estimating method of an aerosol concentration in a target region. S indicates a step (a step). A certain invention described in this specification relates to the estimating method of the aerosol concentration in the target region using a computer.

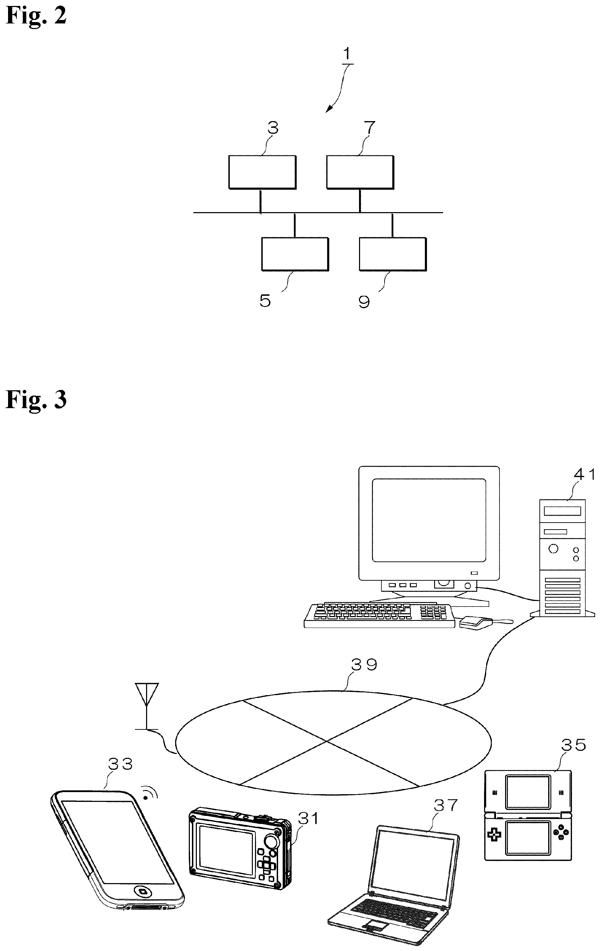

Fig. 2 is a block diagram illustrating an example of an estimating system of the aerosol concentration. This system 1 has a capturing unit 3, a physical quantity acquisition unit 5, an estimation numerical value acquisition unit 7, and an aerosol concentration estimating unit 9. This system is a system based on a computer, and each process is performed by the computer. The computer has an input unit, an output unit, a control unit, a computing unit, and a storage unit, and each element is connected by a bus and the like and is configured to be able to exchange information. For example, in the storage unit, a control program may be stored and various kinds of pieces of information may be stored. When predetermined information is input from the input unit, the control unit reads the control program stored in the storage unit. Then, the control unit appropriately reads the information stored in the storage unit and transmits it to the computing unit. The control unit appropriately transmits the input information to the computing unit. The computing unit performs a computation process using the received various kinds of pieces of information, and computation results are stored in the storage unit. The control unit reads the computation results stored in the storage unit and output it from the output unit. Thus, various kinds of processes and each step are executed. Each unit and each means execute these various kinds of processes.

Fig. 3 is a conceptual diagram illustrating a configuration example of the estimating system of the aerosol concentration. This system may be one that includes a terminal connected to a network such as the Internet or an intranet and a server connected to the network. Surely, a single computer or a mobile terminal may function as a device of the present invention, or a plurality of servers may exist. In the example in Fig. 3, input terminals 31, 33, 35, 37 are connected to a server 41 via a network 39. Examples of the input terminals are a camera 31, a smartphone 33, a portable game machine 35, and a notebook computer 37. Any device having a capturing unit like these can function as an input terminal for this system. The captured sample image may be processed within these terminals or may be sent to the server 41 to be processed in the server.

Next, an example of the estimating method of the aerosol concentration in the target region using a computer will be described. As illustrated in Fig. 1, this method includes a physical quantity acquisition step (S101), an estimation numerical value acquisition step (S102), and an aerosol concentration estimating step (S103). This series of algorithms for estimating the aerosol concentration is called SNAP-CII.

The physical quantity acquisition step (S101) is a step of acquiring a physical quantity from the sample image in which the target region has been captured. It is only necessary that the target region is a region where a spatial photograph can be captured. The target region may be a certain area or may be a region that is captured from a certain place. The physical quantity is a numerical value that is used for obtaining the estimation numerical value used for estimating the aerosol concentration in the aerosol concentration estimating step. In order to obtain the sample image, it is only necessary to input the sample image captured by a known capturing device into a computer. The sample image may be a spatial digital image obtained by capturing the target region with the capturing device. The physical quantity may be one for the entire sample image or for each pixel. The physical quantity may be one for a specific region of the sample image. Examples of the physical quantities are an intensity I for each pixel, the intensity I for each color of each pixel, a value for each color of each pixel, the intensity I of a certain region of the sample image, the intensity for each color in a certain region, a value for each color in a certain region, and brightness. The computer reads the sample image (or the pixel of the sample image) from the storage unit, analyzes the read sample image, and obtains the predetermined physical quantity. As described below, since the invention estimates the aerosol concentration using machine learning, the aerosol concentration can be estimated using any physical quantity as long as it is obtained from the sample image. Specifically, a physical quantity that changes depending on the aerosol concentration is a preferable physical quantity. The obtained physical quantity is appropriately stored in the storage unit.

The estimation numerical value acquisition step (S102) is a step of obtaining the estimation numerical value for estimating the aerosol concentration using the obtained physical quantity. The computer reads the physical quantity obtained in the physical quantity acquisition step from the storage unit. Then, the control unit, based on program instructions, appropriately reads necessary numerical values from the storage unit and uses the numerical values together with the physical quantity to cause the computing unit to perform a computation to obtain the estimation numerical value. Any value may be used as this estimation numerical value as long as the value has been confirmed using a method such as the machine learning that the actual aerosol concentration and estimated value are related. The computer appropriately stores the obtained estimation numerical value in the storage unit.

The aerosol concentration estimating step (S103) is a step of estimating the aerosol concentration using the estimation numerical value. The computer reads the estimation numerical value from the storage unit. The control unit of the computer, based on the program instructions, estimates the aerosol concentration using the estimation numerical value. The computer is equipped with, for example, a machine learning engine and may estimate the aerosol concentration using the estimation numerical value by the machine learning. The obtained aerosol concentration may be stored in the storage unit. The computer may output the aerosol concentration. The computer may determine other numerical values such as a visibility degree, view quality, or an air pollution degree using the estimated aerosol concentration. Regarding a meteorological condition determination step, one that is described later may be appropriately used.

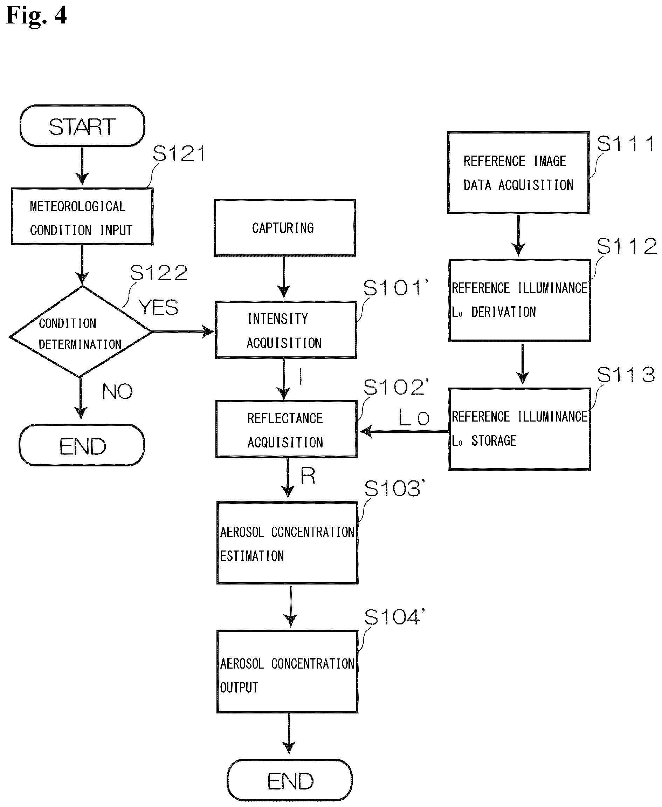

Fig. 4 is a flowchart illustrating an example of steps for obtaining the aerosol concentration with reflectance.

### Preliminary Preparation Step

The preliminary preparation step is a step of obtaining a reference illuminance L₀ used for estimating the aerosol concentration in the target region. The preliminary preparation step is not specifically limited as long as it can achieve the above. Examples of the preliminary preparation step include a reference image data acquisition step (S111), a reference illuminance L₀ derivation step (S112), and a reference illuminance L₀ storage step(S113).

### Reference Image Data Acquisition Step (Sill)

The reference image data acquisition step is a step of acquiring reference image data in order to derive the reference illuminance L₀ of the target region. An example of this image data is captured image data. For example, in advance, from a location where the target region for which a state of air pollution is to be estimated can be captured, a capturing device (the capturing unit 3) such as a camera is used to capture the target region by directing it in a predetermined direction. Thus, it is possible to obtain the reference image data. The capturing device may be one like a CCD or a smartphone camera. However, in order to be able to capture the target region in a fixed direction, a capturing direction control device for controlling the capturing direction may be used. Another example of the capturing device is a fixed-point camera. The computer may appropriately store the obtained reference image data in the storage unit.

### Reference Illuminance L₀ Derivation Step (S112)

The reference illuminance L₀ derivation step is a step of deriving the reference illuminance L₀. The reference image data usually includes a plurality of pixels. The reference illuminance L₀ is preferably the illuminance L₀ for each pixel of the reference image data. The control unit of the computer reads the reference image data from the storage unit and causes the computing unit to perform a computation for determining the intensity (I₀) for each pixel based on the program instructions. The control unit, based on the program instructions, causes the computing unit to perform the computation for obtaining the illuminance L₀ for each pixel from the intensity (I₀) for each pixel of the reference image data. An example of this computation process is a computation process with a bilateral filter. The example of computation process using the bilateral filter is known as described in JP-A-No. 2019-180002 and JP-A-No. 2021-057866. A preferable example of the reference illuminance L₀ is the illuminance obtained using a spatial image of the target region identical to a capturing place of the sample image, which is captured at the capturing place identical to a capturing place of the sample image, which will be described later. It is preferable that the sample image is one that includes a partial region image covering any one or more of the sky upper layer part, the sky lower layer part, the horizon and the boundary part, and the building part. However, the reference illuminance L₀ may be a value estimated from the reference illuminance L₀ in a neighboring target region.

### Reference Illuminance L₀ Storage Step (S113)

The reference illuminance L₀ storage step is a step of causing the storage unit to store the reference illuminance L₀. The control unit of the computer causes the storage unit to store the reference illuminance L₀ obtained by the computation process. Thus, by performing bilateral filter processing on the image data, the reference illuminance L₀ for each pixel can be obtained and stored in the storage unit.

It is not necessary to obtain the reference illuminance L₀ for all pixels of the image data. Among the image data, the reference illuminance L₀ may be obtained for pixels included in the portion necessary for obtaining the reflectance.

### Meteorological Condition Determination Step

The meteorological condition determination step is a step of determining whether or not the meteorological conditions are suitable for estimating the aerosol concentration (whether or not the capturing place meets clear weather conditions). Another example of the meteorological condition determination step is, when the methods for estimating the aerosol concentration are different depending on the meteorological conditions or when parameters for estimating the aerosol concentration are different depending on the meteorological conditions, a step of determining the meteorological conditions used for those determination. The meteorological condition determination step is not specifically limited as long as it can achieve the above. This step may also be performed in the preliminary preparation step.

An example of the meteorological condition determination step is one that includes a meteorological conditions input step (S121) and a condition determination step (S122). The meteorological conditions input step (S121) is a step of inputting the information necessary for determination into the computer, and the condition determination step (S122) is a step of determining the meteorological conditions based on the input information. A specific example of the meteorological condition determination step is one that determines the meteorological conditions using a global solar irradiance (GSI) and a diffuse solar irradiance (DSI). A daylighting system is described in a brochure of WO2018/100957. A weather detection unit of this daylighting system includes a pyrheliometer that detects a direct solar irradiance and a pyranometer that detects a global solar irradiance. Then, this system calculates the diffuse solar irradiance by subtracting the direct solar irradiance from the global solar irradiance and calculates a ratio of the diffuse solar irradiance to the direct solar irradiance. A system that uses the pyrheliometer and the pyranometer to determine the global solar irradiance and the diffuse solar irradiance like this is well known. The computer may be connected to the pyrheliometer or the pyranometer, or may be configured to be able to input observation data from the pyrheliometer and the pyranometer.

An example of the meteorological condition determination step is one that uses GSI > 550 W/m² and DSI/GSI < 0.15 as determination criteria for clear weather. In this example, the global solar irradiance (GSI) and the diffuse solar irradiance (DSI) are input into the system. The system appropriately stores the input global solar irradiance (GSI) and diffuse solar irradiance (DSI) in the storage unit. The control unit, based on the program instructions, reads the global solar irradiance (GSI) and a threshold value (for example, 550 W/m²) from the storage unit. The control unit causes the computing unit to perform the computation to compare the global solar irradiance (GSI) with the threshold value, and when the global solar irradiance (GSI) is larger than the threshold value, the process proceeds to the next step. On the other hand, the control unit causes the computing unit to perform the computation to compare the global solar irradiance (GSI) with the threshold value and determines that the weather conditions are not clear weather when the global solar irradiance (GSI) is smaller than the threshold value. In the next step, the control unit reads the global solar irradiance (GSI) and the diffuse solar irradiance (DSI) from the storage unit and, based on the program instructions, causes the computation process for obtaining DSI/GSI to be performed. When this process is performed in hardware, using a reverse circuit and a multiplication circuit, DSI/GSI may be obtained by obtaining 1/global solar irradiance (GSI) from the global solar irradiance (GSI) and multiplying the obtained value by the diffuse solar irradiance (DSI). The control unit stores the obtained DSI/GSI in the storage unit. The control unit reads DSI/GSI and the threshold value (for example, 0.15) from the storage unit, and, based on the program instructions, causes the computing unit to perform the computation to compare DSI/GSI with the threshold value. As a result, when DSI/GSI is smaller than the threshold value, the weather conditions may be determined to be clear weather. Information indicating that the weather conditions are clear weather may be appropriately stored in the storage unit or may be used for the next process.

By causing the computing unit of the computer to read the sample image form the storage unit, to perform pattern matching processing based on the program instructions, and to perform the computation to classify the sample image into a sunny area, a cloudy area, rain, buildings, trees, and others, the meteorological conditions may be determined based on the obtained computation results. In this respect, the meteorological conditions may be determined by, for example, reading a threshold value serving as the determination criteria from the storage unit and comparing the computation result with the threshold value.

The meteorological conditions of the target region may be input from the input unit of the computer and may be stored in the storage unit. Then, the control unit of the computer may cause the computing unit to appropriately perform the computation process based on the program instructions and determine whether or not the input meteorological conditions (for example, conditions of any one or more of the weather, temperature, humidity, and precipitation probability) are suitable for estimating the aerosol concentration. Based on the input meteorological conditions, a coefficient for determining the aerosol concentration is appropriately used and may be used in the step of estimating the aerosol concentration, which will be described later.

For example, in the meteorological condition determination step, when the meteorological conditions at the time of measurement are determined to be suitable for estimating the aerosol concentration, a step of estimating the aerosol concentration, which will be described later, may be performed.

### Aerosol Concentration in Target Region Estimating Step

The aerosol concentration in the target region estimating step is a step of estimating the aerosol concentration in the target region using a computer. This step includes an intensity acquisition step (S101'), a reflectance acquisition step (S102'), and an aerosol concentration estimating step (S103'). After these steps, an aerosol concentration output step (S104') may follow.

### Intensity Acquisition Step (S101')

The intensity acquisition step (S101') is a step of obtaining the intensity I of the sample image in which the target region has been captured. The target region means a spatial region of the area in which the aerosol concentration is desired to be estimated. The meaning of capturing is as explained above. The capturing unit 3 is an element for capturing the sample image. The capturing unit 3 captures the sample image. The sample image in which the target region has been captured is input into the computer and is appropriately stored in the storage unit. In this respect, any one piece or more pieces of information of the capturing place (identification information), the capturing time, and the meteorological conditions at the time of capturing may also be input into the computer and stored in the storage unit in a state of being appropriately associated with the input sample image.

### Intensity Calculation Step

An intensity calculation unit 5 obtains the intensity I of the sample image. For example, the control unit, the computing unit, and the storage unit of the computer functions as the intensity calculation unit 5. For example, based on the program instructions, the control unit of the computer reads the sample image from the storage unit and obtains the intensity (I_{tgt}) of the sample image. In this respect, the computer may obtain the intensity (I_{tgt}) for each pixel of the sample image. In this respect, the intensity may be obtained for each color such as RGB. The intensity value for each color such as RGB may be corrected by gamma correction or the like. Three axes of color components are not limited to RGB, and may be any three axes of CMY, CIE XYZ, CIE xyY, CIE u'v'Y, CIE LUV, CIE LAB, CIE LCh, and the like. The obtained intensity (I_{tgt}) may be appropriately stored in the storage unit.

The intensity calculation unit 5 may divide the sample image into a plurality of regions and extract the region for estimating the aerosol concentration. For example, the sample image may be divided into partial region images covering any one or more of the sky upper layer part, the sky lower layer part, the horizon and the boundary part, and the building part. By analyzing the sample image, the regions with obstacles such as the buildings and the trees may be excluded from the region for obtaining the aerosol concentration. Furthermore, in the sky region, by analyzing an amount of clouds, it may be excluded from the region for obtaining the aerosol concentration, or coefficients and constants (correction values) in obtaining the aerosol concentration may be determined.

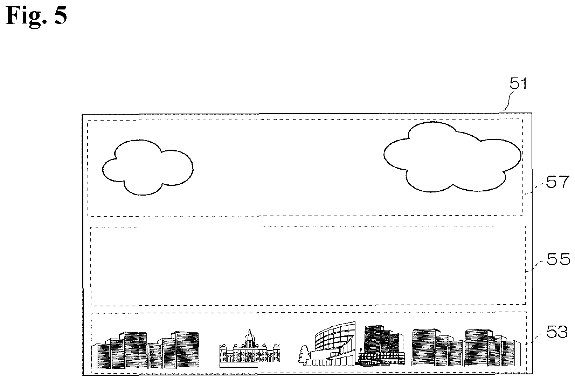

Fig. 5 is a conceptual diagram illustrating an example of pattern matching. In the example in Fig. 5, from RGB values of each pixel included in the sample image, the regions that include parts that are assumed to be the buildings and the trees (regions with the obstacles) are excluded from the region for estimating the aerosol concentration, and the regions of the sample image that presents above the region where the obstacles are present is considered to be the region for estimating the aerosol concentration. In the example in Fig. 5, a sample image 51 is classified into a region 53 that cannot be used for estimating the aerosol concentration because of the obstacles such as the buildings, a region 55, which lies above the region 53, where there are no clouds, and a region 57, which lies further above, where there are clouds.

### Reflectance Acquisition Step (S102')

The reflectance acquisition step (S102') is a step of obtaining a reflectance R of the target region using the reference illuminance L₀ and the intensity I of the sample image in which the target region has been captured.

A reflectance acquisition unit 7 obtains the reflectance R of the region in which the sample image has been captured using the intensity I of the sample image and the reference illuminance L₀. For example, the control unit, the computing unit, and the storage unit of the computer function as the reflectance acquisition unit 7. For example, the control unit of the computer reads the reference illuminance L₀ and the intensity (I_{tgt}) of the sample image from the storage unit and causes the computing unit to perform the computation process for obtaining the reflectance (R_{tgt}). An example of the computation process for obtaining the reflectance is R_{tgt} = I_{tgt/}L₀. In the computation process for obtaining the reflectance, coefficients and constants corresponding to the time and the meteorological conditions may be appropriately used. In this respect, R_{tgt} may be obtained for a plurality of pixels of the sample image. R_{tgt} may be obtained for each color such as RGB. The value for each color such as RGB may be corrected by gamma correction or the like. Three axes of color components are not limited to RGB, and may be any three axes of CMY, CIE XYZ, CIE xyY, CIE u'v'Y, CIE LUV, CIE LAB, CIE LCh, and the like. In the following, RGB will be explained as an example. A preferred example is one in which R_{tgt} is obtained for a plurality of pixels and for each color. A plurality of R_{tgt} are expressed as R_{tgt}[1], R_{tgt}[2], Rt_{gt}[3], ...R_{tgt}[n]. The plurality of R_{tgt} are appropriately stored in the storage unit.

### Aerosol Concentration Estimating Step (S102)

The aerosol concentration estimating step (S102) is a step of estimating the aerosol concentration using the reflectance R. An aerosol concentration estimating unit 9 estimates the aerosol concentration using the reflectance R. For example, the control unit, the computing unit, and the storage unit of the computer function as the aerosol concentration estimating unit 9. A preferred example of the aerosol concentration estimating step (S102) is a step of estimating the aerosol concentration using the reflectance R, using the machine learning. A preferred reflectance R is one that includes reflectance for each of a plurality of color components. The computer preferably has a machine learning engine. This machine learning engine includes a program and a storage unit. Then, the machine learning engine stores R_{tgt} and many pieces of information regarding the aerosol concentration. Then, the machine learning engine estimates the aerosol concentration using the input reflectance R (for example, a plurality of R_{tgt}). The machine learning engine may be one that estimates the aerosol concentration using not only the input reflectance R (for example, a plurality of R_{tgt}) but also the information such as the time and the meteorological conditions. Accordingly, the computer can estimate the aerosol concentration using the reflectance R. The estimated aerosol concentration is appropriately stored in the storage unit.

Another example of the aerosol concentration estimating step is one that includes a step that estimates the aerosol concentration using a ratio of reflectances for a respective plurality of color components. An example of the reflectance for each color components is the reflectance for each of the RGB values. The value for each color such as RGB may be corrected by gamma correction or the like. The three axes of the color components are not limited to RGB, and any color component can be used. In the following, the RGB values will be explained as an example. Examples of the ratio of the reflectances for respective colors are values of R_{B}/R_{G}, R_{G}/R_{R}, and R_{R}/R_{B}. The control unit of the computer causes the computing unit to perform the computation process for obtaining R_{B}/R_{G}, R_{G}/R_{R}, and R_{R}/R_{B} using the values of R_{R}, R_{G}, and R_{B} of the sample image. Then, the control unit of the computer causes the storage unit to appropriately store the obtained values of R_{B}/R_{G}, R_{G}/R_{R}, and R_{R}/R_{B}. The aerosol concentration estimating unit, for example, has the machine learning engine. Then, the aerosol concentration estimating unit estimates the aerosol concentration using the values of R_{B}/R_{G}, R_{G}/R_{R}, and R_{R}/R_{B}. Accordingly, the computer can estimate the aerosol concentration using the ratio of the reflectances for the respective plurality of color components. The estimated aerosol concentration is appropriately stored in the storage unit.

### Aerosol Concentration Output Step (S103)

The estimated aerosol concentration may be appropriately output. For example, the estimated values of the aerosol concentration are output to the server from a plurality of locations. Then, it is possible to collect information on the aerosol concentration over a wide area. As a result, for example, when the aerosol concentration is high near a certain factory and the aerosol concentration becomes lower with distance from the factory, it is assumed that the factory is a source of pollution. For example, when the computer is a mobile terminal (including a smartphone, a mobile phone, and a wristwatch) of a user, the aerosol concentration may be displayed on the display of the mobile terminal. The aerosol concentration may be output to a server that can exchange information with a computer. Thus, the information on the aerosol concentration will be output from the mobile terminals of a plurality of users and aggregated in the server.

The computer may obtain the air pollution degree based on the estimated aerosol concentration. In this case, it is only necessary that the control unit obtains the air pollution degree by reading the threshold value from the storage unit using the estimated aerosol concentration and comparing the estimated aerosol concentration with the threshold value. The obtained air pollution degree may be appropriately stored in the storage unit or may be output. The computer may output the aerosol concentration and the air pollution degree together with weather forecast information.

This specification also provides a program for causing a computer (or a processor) to function as the above-described estimating system of the aerosol concentration and an information recording medium that is readable by the computer storing such a program.

Such a program is a program for causing the computer to function as the estimating system of the aerosol concentration that has a capturing unit that captures the sample image, the intensity calculation unit that obtains the intensity I of the sample image, the reflectance acquisition unit that obtains the reflectance R of the region in which the sample image has been captured using the intensity I of the sample image and the reference illuminance L₀, and the aerosol concentration estimating unit that estimates the aerosol concentration using the reflectance R.

Next, the invention for estimating the aerosol concentration using a value for each color of each pixel of a sample image will be described. In this invention, the aerosol concentration can be estimated without using the reference illuminance L₀. Thus, control of a fixed-point camera or the like is not required. For example, it is one that can promote the use of applications or the like that can be installed on mobile terminals such as a smartphone. Then, this invention makes it possible to collect a plurality of pieces of information regarding the aerosol concentration, making it possible to grasp the state of environmental pollution or the like quickly and over a wide range.

This invention also relates to an estimating system of the aerosol concentration using a computer. This system includes:
a capturing unit that captures a capturing part sample image in which the sample image is captured;
an RGB value acquisition unit that obtains values (for example, the RGB values) for each color of each pixel of the sample image; and
an aerosol concentration estimating unit that estimates the aerosol concentration using the RGB values for each pixel of the sample image or a ratio of the RGB values.
This system acquires the capturing part sample image by capturing the sample image,
obtains values (for example, the RGB values) for each color of each pixel of the sample image, and
estimates the aerosol concentration using the RGB values for each pixel of the sample image or the ratio of the RGB values.

Also in this system, a meteorological condition determination step may be performed. The capturing unit for capturing the sample image is similar to that described above.

The RGB value acquisition unit obtains the values (for example, RGB values) for each color of each pixel of the sample image. The values for each color such as RGB may be corrected by gamma correction or the like. The three axes of the color components are not limited to RGB, and any color component can be used. In the following, for simplicity, this invention will be explained using the RGB values as an example. In this respect, the RGB values may be obtained for all pixels, or the RGB values may be obtained for some pixels. As explained above, RGB is an example for each color, and the value after correction is performed may be used, or other color classifications may be used. In the following, description will be given using an example of one that is classified as RGB. For example, the control unit, the computing unit, and the storage unit of the computer function as the RGB value acquisition unit. For example, the control unit of the computer reads the sample image from the storage unit based on the program instructions and obtains the RGB values for each pixel in a specific region of the sample image. The obtained RGB values (R[1], R[2], R[3], ...R[n]; G[1], G[2], G[3], ...G[n]; B[1], B[2], B[3], ...B[n]) may be appropriately stored in the storage unit.

The aerosol concentration estimating unit may estimate the aerosol concentration using the RGB values for each pixel of the sample image. For example, the control unit, the computing unit, and the storage unit of the computer function as the aerosol concentration estimating unit. A preferred example of the aerosol concentration estimating step is a step of estimating the aerosol concentration using the RGB values for each pixel, using the machine learning. The computer preferably has a machine learning engine. This machine learning engine includes a program and a storage unit. Then, the machine learning engine stores the RGB values for each pixel and many pieces of information regarding the aerosol concentration. Then, the machine learning engine estimates the aerosol concentration using the input RGB values for each pixel. The machine learning engine may be one that estimates the aerosol concentration using not only the input RGB values for each pixel but also the information such as the time and the meteorological conditions. Thus, the computer can estimate the aerosol concentration using the RGB values for each pixel. The estimated aerosol concentration is appropriately stored in the storage unit.

The aerosol concentration estimating unit may be one that uses a ratio for each color of a pixel. Examples of the ratio for each color are the values of B/G, G/R, and R/B. The control unit of the computer causes the computing unit to perform the computation process to obtain B/G, G/R, and R/B, using the RGB values for each pixel of the sample image. Then, the control unit of the computer causes the storage unit to appropriately store the obtained values of B/G, G/R, and R/B. Then, the aerosol concentration estimating unit estimates the aerosol concentration using the values of B/G, G/R, and R/B. Similarly to the above, it is only necessary that the computer has a machine learning engine and estimates the aerosol concentration using the values of B/G, G/R, and R/B.

### [WORKING EXAMPLE 1]

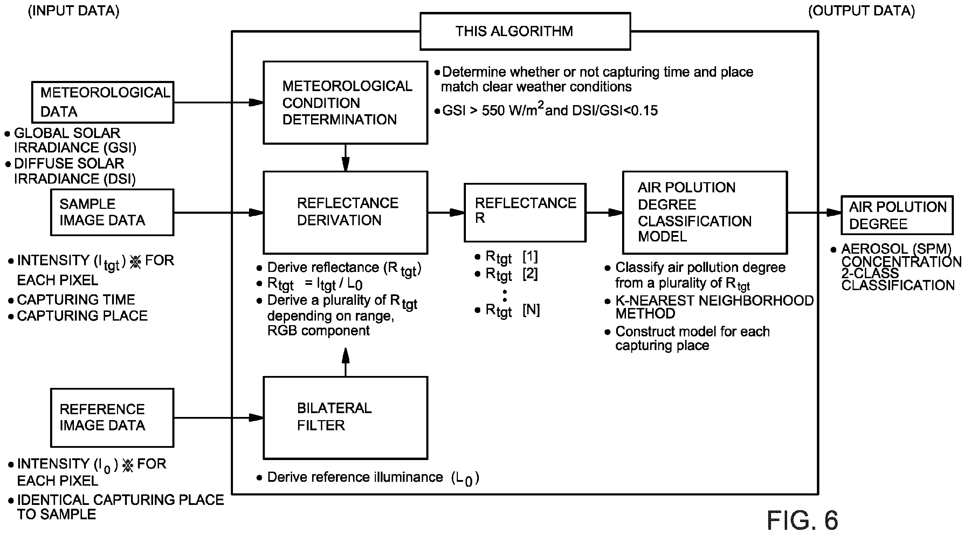

Fig. 6 is a conceptual diagram illustrating a processing step in Working Example 1. In order to extract wavelength dependence of light scattering by the aerosol, the reflectance (R) was derived from the image data. The reflectance R is described by the ratio of the intensity (I) of the image data to the illuminance (L) from light source as R = I/L. The reflectance R was derived from the target image data, and a machine learning model that estimates the aerosol concentration from the reflectance R was created, using this reflectance R as an input variable and the measurement value of the aerosol on the ground as an output variable.

A flow of an algorism in the working example is shown in Fig. 6. First, in order to extract changes in images due to the aerosol concentration with high accuracy, the image data that was heavily influenced by clouds was removed using solar irradiance data. Two variables of global solar irradiance (GSI) and the diffuse solar irradiance (DSI) were combined as the solar irradiance data, and GSI > 550 W/m², DSI/GSI < 0.15 were used as determination criteria for clear weather. The reference illuminance L₀ was derived by applying a bilateral filter to the reference image data from a certain viewing angle, and the reflectance R was derived by dividing the intensity I of the sample image by L₀. By narrowing down the image range to be analyzed to narrow ranges such as the sky upper layer part, the sky lower layer part, the boundary part with the horizon, and the building part, the wavelength dependence of the light scattering of the aerosol was extracted as the reflection R. Furthermore, by analysis for each RGB color component, a plurality of reflectances R were successfully derived from one sheet of image data, making it possible to construct a machine learning model with a small amount of teacher data.

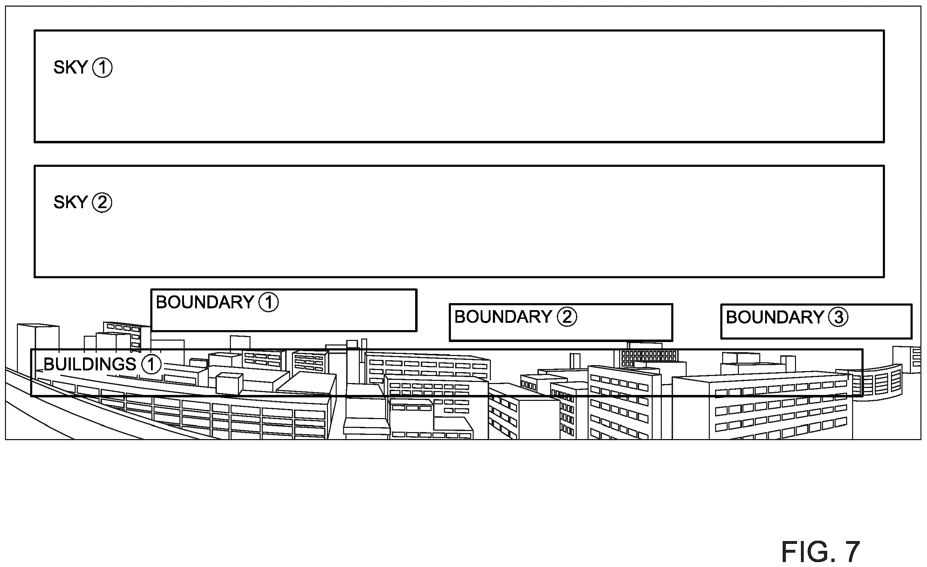

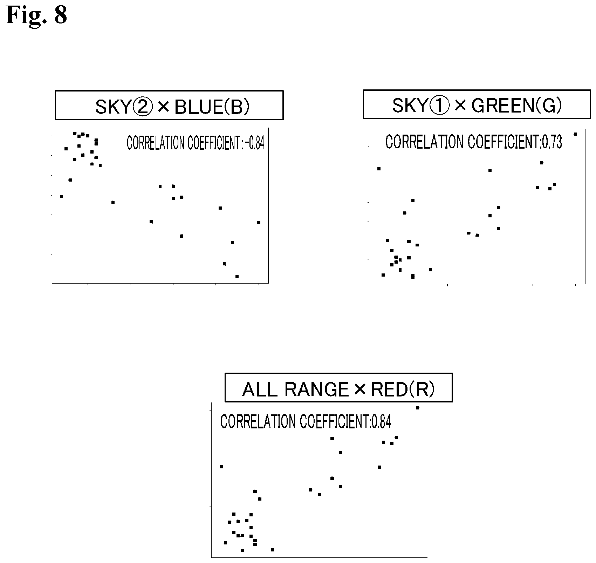

Verification was performed using two months image data from January to February 2021 captured in Fukuoka City. Fig. 7 is a photograph in place of a drawing illustrating an example of a captured sample image. Here, 2-class classification using K-nearest neighborhood method was performed for the concentration of suspended particulate matter (SPM) with a particle size of 10 um or less in the aerosol. Fig. 8 includes graphs in place of drawings in deriving the reflectance. The vertical axis of the graph is the reflectance, and the horizontal axis is the particle size of SPM. The upper left figure is a graph illustrating a correlation between the reflectance of blue color (B) in the region of sky (2) in FIG. 7 and the particle size of SPM. The upper right figure is a graph illustrating the correlation between the reflectance of green color (G) in the region of sky (1) in FIG. 7 and the particle size of SPM. The figure below is a graph illustrating the correlation between the reflectance of red color (R) in the entire region and the particle size of SPM. The threshold value for classification was set to the average observed SPM concentration in January of 25 g/m³. In Test 1, data from January was randomly divided into data for learning and data for a test at a ratio of 6:4, a model constructed using only the data for learning was applied to the data for the test, and a correct answer rate was calculated. In Test 2, January data was used for the learning, and February data was used for the test. For each test, a case where a total of 28 ways of reflectances (7 ways of options of the image range × 4 ways of color components) was used ("an input variable 1") and a case where a total of three reflectances of the image range that had the highest correlation with SPM concentration for each RGB component ("an input variable 2") were compared. The correct answer rate was calculated using a total of 4 ways (2 ways of methods for dividing data × 2 ways of input variables). The results are indicated in the table below. In the case of Test 2 and input variable 2, which are closest to actual operation, the correct answer rate was 86%. Here, verification was performed by extracting data only during the clear weather from the solar irradiance data obtained from Himawari 8 satellite observations.

| | INPUT VARIABLE 1 | INPUT VARIABLE 2 |
|---|---|---|
| TEST 1 | 100% | 92% |
| TEST 2 | 86% | 86% |

As indicated in this working example, it is possible to estimate an aerosol amount using the image data from the fixed-point camera used in a weather forecast and the like. Cameras are easier to obtain than specialized measuring devices used in a method that utilizes optical properties of the aerosol and are thought to significantly expand an observation range of aerosol observation and significantly improve a count of observation points. This has great academic significance, enabling big data analysis and the like using observation data of spatiotemporally dense aerosol concentration, and application to a forecast for the air pollution such as the aerosol is expected. Furthermore, since it is possible to achieve application not only to a fixed-point camera but also to images captured with smartphones, all the citizens will be able to perform aerosol observation. It is expected that the level of understanding and awareness among the general public about earth atmosphere observation, not just air pollution, will be increased, and not only academic significance but also high potential for social application will be enhanced.

### [WORKING EXAMPLE 2]

### Working Example 2

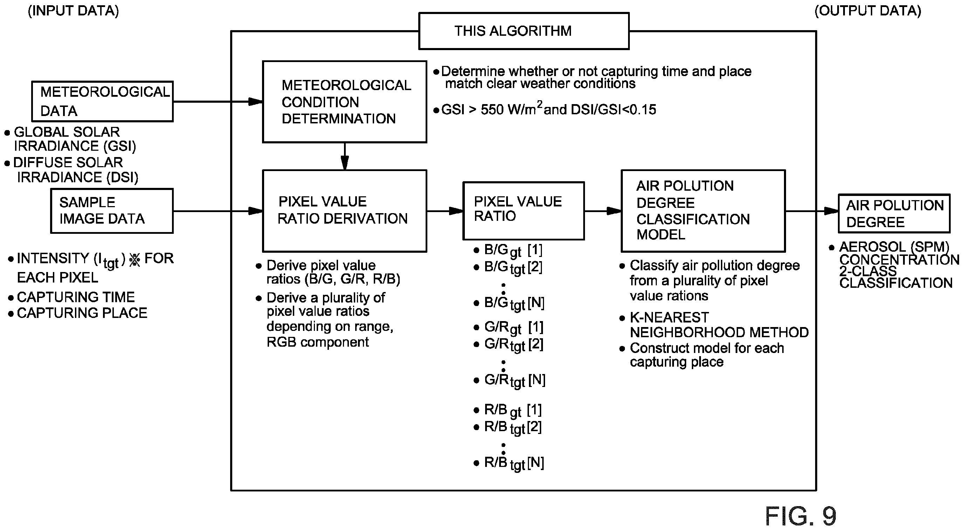

Fig. 9 is a conceptual diagram illustrating a processing step in Working Example 2. In this example, it is possible to obtain the aerosol concentration simply by capturing the sample image. Similarly to Working Example 1, in order to extract changes in images due to the aerosol concentration with high accuracy, the image data that was heavily influenced by clouds was removed using solar irradiance data. Two variables of global solar irradiance (GSI) and the diffuse solar irradiance (DSI) were combined as the solar irradiance data, and GSI > 550 W/m², DSI/GSI < 0.15 were used as determination criteria for clear weather. The image range to be analyzed was narrowed down to narrow ranges such as the sky upper layer part, the sky lower layer part, the boundary part with the horizon, and the building part. In addition to capturing the sample image, information regarding the capturing time and the capturing place was input into the system. This information was stored in association with the sample image. The RGB values were obtained for each pixel in the analysis target region of the captured sample image. By using the obtained RGB values, ratios (pixel value ratios) of these were obtained. The pixel value ratios were obtained as B/G, G/R, R/B. The relationship between the pixel value ratio and the value of the aerosol concentration was stored in advance in relation to the capturing time and the capturing place. Using this information, it was made possible to construct a machine learning model with a small amount of teacher data. Using the pixel value ratio obtained by analyzing the target region of the sample image, the machine learning engine is used to obtain the aerosol concentration in the target region.

### INDUSTRIAL APPLICABILITY

The invention can be used in fields such as meteorological forecasting.

### REFERENCE SIGNS LIST

- 1: system
- 3: capturing unit
- 5: physical quantity acquisition unit (intensity calculation unit)
- 7: estimation numerical value acquisition unit (reflectance acquisition unit)
- 9: aerosol concentration estimating unit

## Claims

1. A method for estimating an aerosol concentration in a target region using a computer, comprising:
a physical quantity acquisition step of acquiring a physical quantity from a sample image in which the target region has been captured;
an estimation numerical value acquisition step of obtaining an estimation numerical value for estimating the aerosol concentration using the physical quantity; and
an aerosol concentration estimating step of estimating the aerosol concentration using the estimation numerical value.

2. The method according to claim 1, wherein
the sample image includes a partial region image covering any one or more of a sky upper layer part, a sky lower layer part, a horizon and a boundary part, and a building part.

3. The method for estimating the aerosol concentration according to claim 1, wherein
the physical quantity is an intensity of the sample image in which the target region has been captured, and
the estimation numerical value is a reflectance of the target region obtained by using a reference illuminance and the intensity of the sample image in which the target region has been captured.

4. The method according to claim 3, wherein,
the reference illuminance is an illuminance obtained by using a spatial image in the target region captured at a capturing place identical to a capturing place of the sample image, and
the aerosol concentration estimating step is a step of estimating the aerosol concentration using the estimation numerical value, using machine learning.

5. The method according to claim 1, wherein
the reflectance R includes the reflectances for a respective plurality of color component.

6. The method according to claim 1, wherein,
the physical quantity is a value for each color of each pixel,
the estimation numerical value is a ratio of the values for each color, and
the aerosol concentration estimating step is a step of estimating the aerosol concentration using the estimation numerical value, using machine learning and includes a step of estimating the aerosol concentration using a ratio of the reflectances.

7. An aerosol concentration estimating system using a computer, comprising;
a capturing unit that captures a sample image;
a physical quantity acquisition unit that acquires a predetermined physical quantity from the sample image;
an estimation numerical value acquisition unit that acquires an estimation numerical value for estimating the aerosol concentration using the physical quantity; and
an aerosol concentration estimating unit that estimates the aerosol concentration using the estimation numerical value.
